# DEMANDE DE BREVET EUROPEEN

(11) **EP 2 420 348 A1**
(43) Date de publication de la demande: **22.02.2012**
(21) Numéro de dépôt: 11177859.3
(22) Date de dépôt: 17.08.2011
(51) Int. Cl.: B23Q 3/08, B25B 1/18, F15B 11/036, B25B 5/06, F15B 15/10

(54) **Dispositif d'actionnement linéaire à vérins multiples et procédé de contrôle d'un tel dispositif**

(30) Priorité: 18.08.2010 FR 1003394
(71) Demandeur: Michel Pioch (Société à Responsabilité Limitée), 46400 Saint-Céré (FR)
(72) Inventeur: Cocher, Stéphane, 46400 SAINT-CÉRÉ (FR)
(74) Mandataire: Cabinet BARRE LAFORGUE & associés

(57) **Abrégé**

L'invention concerne un dispositif d'actionnement linéaire comprenant un bâti (1), un équipage mobile selon un axe longitudinal, une pluralité de vérins (6, 7) linéaires interposés entre le bâti et l'équipage mobile de façon à pouvoir actionner l'équipage mobile selon l'axe longitudinal en venant au moins en butée sur l'équipage mobile et sur le bâti, caractérisé en ce qu'il comporte en outre au moins un dispositif d'alimentation en énergie raccordé aux entrées d'alimentation (11) d'au moins deux vérins (6, 7), et adapté pour pouvoir fournir simultanément une première puissance à au moins un premier vérin, et une deuxième puissance, différente de la première puissance, à au moins un deuxième vérin.

## Description

L'invention concerne un dispositif d'actionnement linéaire, notamment un dispositif de serrage ou de bridage. L'invention concerne un tel dispositif comprenant une pluralité de vérins d'actionnement. L'invention concerne aussi un procédé de contrôle d'un tel dispositif.

Des vérins de différentes puissances et de différentes tailles sont disponibles, mais les vérins capables d'exercer des efforts importants sur des surfaces réduites sont coûteux. Ils requièrent parfois l'utilisation d'un suppresseur permettant de les alimenter à une pression plus importante mais qui ajoute un coût important à l'achat et en consommation énergétique.

Certains dispositifs proposent de monter plusieurs vérins de dimensions réduites, en parallèle mécaniquement, afin d'en récupérer la somme des efforts. On connaît déjà des dispositifs de serrage à vérins multiples décrits par exemple dans US 4,949,943. Cependant de tels dispositifs présentent de nombreux inconvénients. Tout d'abord ils sont construits à propos et n'utilisent donc pas des pièces disponibles dans le commerce, d'où un coût de fabrication très élevé.

En outre, la compacité d'un tel dispositif n'est pas optimale. En effet, la pression exercée par chacun des étages d'actionnement n'est exercée que sur une surface annulaire. Or cette surface annulaire est d'autant plus réduite que la tige mobile centrale de transmission des efforts des vérins présente un diamètre important.

De plus, l'ensemble des vérins étant alimenté par une même source de fluide sous pression, les efforts exprimés par les vérins sur la tige mobile sont régulés par la pression d'alimentation de l'ensemble des vérins. Une faible variation de pression d'alimentation en fluide a donc pour effet une modification importante du déplacement et/ou de l'effort imputé par les vérins à la tige mobile.

Aussi, si l'un des vérins ne fonctionne pas correctement ou s'il est incorrectement alimenté en fluide, l'ensemble du dispositif présente un fonctionnement dégradé.

L'invention vise donc à pallier ces inconvénients en proposant un nouveau dispositif d'actionnement linéaire et un nouveau procédé de contrôle d'un tel dispositif.

L'invention vise notamment à proposer un tel dispositif qui soit économique et utilise au maximum des pièces standards simples à remplacer.

L'invention vise également à proposer un tel dispositif qui soit efficace en toutes circonstances.

L'invention vise en outre à proposer un tel dispositif dont l'alimentation en fluide permet un réglage fin de l'effort développé.

Dans tout le texte, on désigne par « fluide » tous types de fluides, liquides ou gazeux, purs ou en mélanges. De même on utilise le terme « fluidique » de façon générique pour les termes « pneumatique » et « hydraulique ».

L'invention concerne donc un dispositif d'actionnement linéaire comprenant :
- un bâti,
- un équipage mobile en translation par rapport au bâti selon un axe d'actionnement principal, dit axe longitudinal,
- une pluralité de vérins linéaires comportant chacun :
   ● un corps,
   ● un organe d'actionnement mobile par rapport audit corps selon un axe d'actionnement,
   ● une entrée d'alimentation en énergie,
      lesdits vérins étant interposés entre le bâti et l'équipage mobile, d'axes d'actionnement sensiblement parallèles audit axe longitudinal, de façon à pouvoir actionner l'équipage mobile selon l'axe longitudinal en venant au moins en butée sur l'équipage mobile et sur le bâti,
      caractérisé en ce qu'il comporte en outre au moins un dispositif d'alimentation en énergie :
      - raccordé aux entrées d'alimentation d'au moins deux vérins,
      - adapté pour pouvoir fournir simultanément une première puissance à au moins un premier vérin, et une deuxième puissance, différente de la première puissance, à au moins un deuxième vérin.

Ainsi, un dispositif selon l'invention peut être pneumatique, hydraulique ou électrique. L'énergie fournie aux vérins est soit fluidique (pression de fluide), soit électrique (puissance électrique modulée en fréquence, intensité, tension...). En particulier les entrées d'alimentation des vérins sont des connecteurs électriques dans le cas d'un dispositif électrique, et sont des bouches d'alimentation en fluide dans le cas d'un dispositif fluidique.

Cependant, avantageusement et selon l'invention :
- chaque vérin est un vérin fluidique,
- l'entrée d'alimentation en énergie de chaque vérin est une bouche d'alimentation en fluide,
- le dispositif d'alimentation en énergie est un dispositif d'alimentation en fluide sous pression adapté pour pouvoir fournir simultanément un fluide sous pression à une première pression à au moins un premier vérin, et à une deuxième pression, différente de la première pression, à au moins un deuxième vérin.

En particulier, l'invention concerne donc un dispositif d'actionnement linéaire comprenant :
- un bâti,
- un équipage mobile en translation par rapport au bâti selon un axe d' actionnement principal, dit axe longitudinal,
- une pluralité de vérins fluidiques linéaires comportant chacun :
   ● un corps,
   ● un organe d'actionnement mobile par rapport audit corps selon un axe d' actionnement,
   ● une bouche d'alimentation en fluide,
   lesdits vérins étant interposés entre le bâti et l'équipage mobile, d'axes d'actionnement sensiblement parallèles audit axe longitudinal, de façon à pouvoir actionner l'équipage mobile selon l'axe longitudinal en venant au moins en butée sur l'équipage mobile et sur le bâti,
   caractérisé en ce qu'il comporte en outre au moins un dispositif d'alimentation en fluide sous pression :
   - raccordé aux bouches d'alimentation d'au moins deux vérins,
   - adapté pour pouvoir fournir simultanément un fluide sous pression à une première pression à au moins un premier vérin, et à une deuxième pression, différente de la première pression, à au moins un deuxième vérin.

En particulier le bâti du dispositif d'actionnement est destiné à être fixé au châssis d'une machine, par exemple une machine d'usinage dans laquelle on souhaite maintenir en position par serrage une pièce à usiner.

Les vérins sont disposés au moins en butée entre le bâti et l'équipage mobile du dispositif d'actionnement, c'est-à-dire qu'ils peuvent venir en butée sur l'un, l'autre ou simultanément sur ces deux éléments lorsqu'ils sont actionnés. C'est un montage avantageux lorsque les vérins sont des vérins à pousser.

Cependant, rien n'empêche que le corps et/ou l'organe d'actionnement des vérins à pousser soi(en)t solidairement fixé(s) au bâti et/ou à l'équipage mobile du dispositif d'actionnement linéaire.

Dans le cas de vérins à traction, ces derniers sont avantageusement solidairement fixés d'une part au bâti et d'autre part à l'équipage mobile : par exemple le corps de chaque vérin est fixé au bâti, et l'organe d'actionnement de chaque vérin est fixé à l'équipage mobile pour pouvoir les rapprocher l'un de l'autre par un effort à traction.

Dans un dispositif selon l'invention, au moins deux groupes de vérins peuvent être alimentés simultanément à des pressions de fluide différentes. L'invention permet ainsi d'obtenir, pour la première fois, un dispositif d'actionnement linéaire à vérins multiples autorisant la régulation de la pression d'alimentation en fluide de chacun des vérins indépendamment. L'invention permet donc un ajustement fin de l'effort développé et une plage d'efforts très étendue par un tel dispositif d'actionnement linéaire. Par exemple un premier groupe de vérins peut être alimenté par un fluide sous pression pendant que le second groupe de vérins n'est pas alimenté et n'exerce donc aucun effort : l'effort total développé par le dispositif d'actionnement linéaire dans ce cas est donc inférieur ou égal à la somme des efforts développés par les vérins du premier groupe.

En effet lorsque les vérins sont alimentés en fluide sous pression, ils exercent entre le bâti et l'équipage mobile un effort total résultant de la somme des efforts individuels de chaque vérin.

Avantageusement, lorsque les vérins sont des vérins à pousser et qu'ils sont montés en butée sur au moins un élément parmi l'équipage mobile et le bâti, seuls les vérins alimentés par un fluide sous pression (donc en arc-boutement entre le bâti et l'équipage mobile) additionnent leur efforts pour former l'effort total développé par le dispositif d'actionnement linéaire selon l'invention.

Dans ce cas particulièrement, si l'un des vérins est défectueux ou s'il ne reçoit aucune alimentation en fluide, il n'apportera pas sa contribution à l'effort total, mais il ne dégradera pas non plus l'effort total exercé par le reste des vérins en fonctionnement.

Lorsque les vérins sont montés solidaires d'une part du bâti et d'autre part de l'équipage mobile, l'effort total développé par les dispositifs d'actionnement linéaire est la somme algébrique des efforts individuels développés par les vérins : certains vérins n'étant pas alimentés en fluide sous pression leur résistance au déplacement de l'équipage mobile équivaut à un effort nul ou légèrement négatif.

La force maximale développée par un dispositif d'actionnement linéaire selon l'invention est donc égale à la somme des forces maximales développées par chaque vérin. La course maximale de déplacement entre l'équipage mobile et le bâti est quant à elle égale à la course maximale du vérin disposant de la plus petite course maximale. Les vérins sont en parallèle mécaniquement.

Les sources d'alimentation en fluide sous pression peuvent être totalement indépendantes les unes des autres et disposer d'un dispositif de régulation de la pression du fluide. Alternativement les sources d'alimentation en fluide peuvent être des arrivées de fluide indépendamment régulées en pression par un même dispositif d'alimentation et de régulation. En particulier lorsqu'un dispositif d'actionnement linéaire selon l'invention est monté dans une machine-outil disposant d'un dispositif d'alimentation en fluide et de régulation de la pression permettant d'obtenir au moins deux pressions différentes simultanément, un dispositif selon l'invention peut y être avantageusement raccordé.

C'est pourquoi, avantageusement et selon l'invention, chaque vérin est raccordé, via sa bouche d'alimentation, à un dispositif d'alimentation en fluide sous pression par une conduite, dite conduite de régulation, équipée d'un organe de régulation de la pression du fluide.

Un tel organe de régulation de la pression peut être de tout types : un venturi fixe délivrant toujours la même pression à partir d'une pression donnée, une vanne de régulation manuelle, une vanne de régulation automatique commandée par ordinateur, un régulateur électropneumatique (ou électrohydraulique) de pression (pressostat), etc.

De plus, avantageusement et selon l'invention, chaque conduite de régulation n'est reliée qu'à un unique vérin, de façon à pouvoir alimenter chacun des vérins à une pression de fluide différente de celle des autres vérins.

Ainsi l'invention propose un dispositif d'actionnement linéaire à vérins multiples en parallèle mécaniquement dans lequel l' alimentation en fluide de chacun des vérins est indépendante de l' alimentation des autres vérins afin de permettre de régler au plus juste l'effort développé par un tel dispositif. En particulier un très faible effort peut être obtenu en n'alimentant qu'un seul vérin à une faible pression.

Par ailleurs, avantageusement et selon l'invention, au moins un organe de transmission de l'équipage mobile est disposé extérieurement aux bords périphériques des vérins.

Un organe de transmission de l'équipage mobile assure une transmission des efforts de chacun des vérins vers une pièce à serrer.

L'invention permet l'utilisation de vérins pleins, c'est-à-dire ne présentant pas d'ouverture ou d'orifice en leur sein destinés à permettre le passage d'un tel organe de transmission, tel qu'une tige centrale par exemple.

L'organe d' actionnement de vérins selon l'invention présente par exemple une forme de disque et non une forme annulaire.

Un dispositif selon l'invention est ainsi avantageusement plus compact à effort maximal égal.

En outre, disposer l'organe de transmission de l'équipage mobile à l'extérieur des vérins simplifie un dispositif selon l'invention. Cela permet aussi de remplacer plus facilement un vérin défectueux sans devoir démonter l'ensemble du dispositif.

De plus, les vérins utilisés dans un dispositif selon l'invention sont aussi plus simples et donc moins coûteux. En effet, ils présentent moins de problèmes d'étanchéité avec l'organe de transmission puisque ce dernier ne traverse pas les vérins.

Un équipage mobile selon l'invention peut par exemple comporter une entretoise en forme de « U » présentant une embase et une pluralité de doigts ; l'embase étant en butée sur l'organe d'actionnement d'au moins un vérin et les doigts transmettant l'effort développé par le(s)dit vérin(s) à un mors de serrage d'une pièce. Les doigts de l'entretoise sont avantageusement disposés à l'extérieur de la périphérie des vérins situés entre le(s) vérin(s) d'actionnement de ladite entretoise et le mors de serrage.

De plus, avantageusement et selon l'invention, les vérins sont d'axes d'actionnement sensiblement colinéaires.

Une meilleure compacité d'un dispositif selon l'invention est ainsi assurée. En effet, l'encombrement diamétral d'un tel dispositif est moins important lorsque les vérins sont superposés selon l'axe longitudinal.

De même, avantageusement et selon l'invention, au moins un vérin est un vérin pneumatique plat dont l'organe d'actionnement est une membrane souple.

Le dispositif d'actionnement linéaire selon l'invention est d'autant plus compact selon l'axe longitudinal que les vérins sont des vérins plats.

Les vérins étant des vérins pneumatiques, les sources d'alimentation sont des sources d'alimentation en fluide gazeux, par exemple des sources d'alimentation en air sous pression.

Avantageusement, l'organe d'actionnement de tels vérins pneumatiques est une membrane souple déformable se déformant sous l'effet d'un gaz sous pression injecté par la bouche d'alimentation dudit vérin.

De tels vérins sont disponibles dans le commerce en pièces détachées, de différentes tailles, et sont relativement peu coûteux. Des vérins standards peuvent être avantageusement utilisés de sorte à réduire les coûts de fabrication et de maintenance (remplacement d'un vérin) d'un dispositif selon l'invention.

De tels vérins plats pneumatiques sont avantageusement de forme cylindrique, de sorte que la membrane (organe d'actionnement) présente une surface en forme de disque. Cependant, rien n'empêche d'utiliser des vérins de forme différente dans un dispositif selon l'invention (par exemple carrés, oblongs,...).

Avantageusement, un dispositif selon l'invention est aussi caractérisé en ce que l'équipage mobile présente plusieurs étages selon l'axe longitudinal, dont un au moins est adapté pour pouvoir être en contact avec l'organe d'actionnement d'au moins un vérin.

L'équipage mobile présente avantageusement plusieurs étages, parallèles entre eux et sensiblement orthogonaux à l'axe longitudinal. Chaque étage de l'équipage mobile est adapté pour pouvoir recevoir les efforts et/ou le déplacement de l'organe d'actionnement de l'un des vérins.

Grâce à cette structure étagée, l'équipage mobile reçoit la somme des efforts des vérins et est adapté pour transmettre la somme des efforts à une pièce que l'on souhaite maintenir par serrage axial.

Aussi, avantageusement et selon l'invention, le bâti présente une pluralité de chambres étagées selon l'axe longitudinal, chaque vérin étant disposé dans l'une des chambres du bâti.

En particulier, avantageusement et selon l'invention, chaque corps de vérin est fixé dans l'une des chambres du bâti.

Avantageusement et selon l'invention, au moins un étage de l'équipage mobile est interposé, dans une chambre du bâti équipée d'un vérin, entre l'organe d'actionnement dudit vérin et une paroi de ladite chambre située en vis-à-vis de l'organe d'actionnement dudit vérin.

L'équipage mobile et le bâti sont donc imbriqués l'un dans l'autre. Les chambres étagées du bâti et les étages de l'équipage mobile sont séparés longitudinalement les uns des autres par les vérins dans un premier sens selon l'axe longitudinal, et peuvent venir en butée les uns contre les autres dans le second sens selon l'axe longitudinal. Les contacts entre les différentes pièces peuvent être par exemple des contacts surfaciques plans ou cylindriques.

En particulier, avantageusement, dans un dispositif selon l'invention le bâti comporte au moins une butée adaptée pour pouvoir limiter une course de l'équipage mobile selon l'axe longitudinal.

Une telle butée permet de réaliser une fonction dite anti-éclatement. Cette fonction consiste à limiter la course maximale de l'organe d'actionnement d'un vérin, notamment d'un vérin pneumatique, afin d'éviter son éclatement lorsqu'une pression de gaz trop importante est injectée par la bouche d'alimentation dudit vérin. En effet, sans limitation de sa course, la membrane souple d'un vérin pneumatique éclaterait sous l'effet d'une pression de gaz supérieure à la pression maximale admissible, de l'ordre de 6 bars par exemple pour certains vérins du commerce.

Une telle butée est par exemple avantageusement formée par les chambres étagées du bâti sur lesquelles les étages de l'équipage mobile peuvent venir en butée dans un sens selon l'axe longitudinal. Cependant une telle butée peut être réalisée de multiples autres manières, par exemple en formant un collet dans le bâti en regard d'un épaulement de l'équipage mobile.

C'est pourquoi, avantageusement et selon l'invention, la course maximale de l'équipage mobile est inférieure à la course maximale de l'organe d'actionnement d'un vérin.

En particulier la course maximale de l'équipage mobile est limitée à la course maximale de l'organe d'actionnement du vérin qui, parmi la pluralité de vérin, présente la course maximale la plus courte, afin de prévenir son éclatement.

De plus, avantageusement et selon l'invention, l'équipage mobile est rappelé dans une position, dite position de repos, par un ressort de rappel, ladite position de repos de l'équipage mobile correspondant à une position de repos des vérins.

La position de repos des vérins est une position dans laquelle leur organe d'actionnement est rétracté dans le cas de vérins à pousser, et en saillie dans le cas de vérins à traction.

Lorsque la pression de fluide appliquée aux vérins est relâchée, ceux-ci peuvent présenter une hystérésis de forme : ils ne reviennent pas toujours parfaitement à leur position de repos (ou position d'origine).

On peut leur appliquer une pression négative (inférieure à la pression ambiante) pour les forcer à revenir dans cette position. Cependant, lorsque l'équipage mobile est simplement en butée unidirectionnelle (notamment dans le sens d'un actionnement à pousser) celui-ci n'est pas ramené en position de repos.

C'est pourquoi, un ressort de rappel permet de s'assurer de façon simple et fiable que l'équipage mobile revient en position de repos. Dès lors que la pression injectée dans les vérins est relâchée, c'est-à-dire qu'elle n'est plus suffisante à contrer l'effort appliqué par ledit ressort de rappel, l'équipage mobile revient en position de repos et ramène les vérins dans leur propre position de repos, évitant ainsi d'avoir à appliquer une pression négative aux vérins.

En particulier une position de repos de l'équipage mobile est une position dans laquelle l'équipage mobile est en butée contre les vérins dans leur position de repos.

Un retour systématique en position de repos est particulièrement avantageux dans les machines d'usinage, dans lesquelles les pièces à usiner sont fréquemment serrées puis desserrées, afin notamment de les déplacer par rapport à l'outil d'usinage. Ledit ressort de rappel permet de s'assurer que l'équipage mobile ne frottera pas la pièce à usiner au cours de son déplacement, dès lors que la pression appliquée aux vérins est relâchée.

Le ressort de rappel est avantageusement un ressort de compression disposé entre une butée du bâti et une butée de l'équipage mobile.

Avantageusement un dispositif selon l'invention comporte un premier équipage mobile selon l'axe longitudinal, actionné par au moins un premier vérin, et au moins un deuxième équipage mobile selon l'axe longitudinal, différent du premier équipage mobile, actionné par au moins un deuxième vérin, différent dudit premier vérin.

Avantageusement un dispositif selon l'invention peut comprendre un équipage mobile selon l'axe longitudinal pour chaque vérin, chaque équipage mobile étant adapté pour pouvoir :
- être actionné par l'organe d'actionnement d'un vérin au moins en butée contre ledit équipage,
- venir en butée sur le bâti au bout d'une course maximale prédéterminée.

Ainsi, chaque vérin (ou groupe de vérins) applique indépendamment un effort, par l'intermédiaire d'un équipage mobile, sur une pièce à serrer. De cette sorte, l'effort de chaque vérin (ou groupe de vérins) est appliqué en un point différent de la pièce à serrer.

Un tel dispositif permet d'assurer le serrage d'une pièce dont la surface est irrégulière : chaque équipage mobile se déplace d'une course le long de l'axe longitudinal jusqu'au contact avec ladite pièce à serrer. Chaque équipage mobile étant indépendant des autres équipages mobiles et actionné par son propre (groupe de) vérin(s), peut se déplacer d'une course différente des autres équipages mobiles. Ainsi les irrégularités de surface de la pièce à serrer sont compensées par les différences de course entre équipages mobiles.

Un tel dispositif est particulièrement avantageux lorsque la pièce à serrer présente deux surfaces sensiblement parallèles à des distances distinctes dudit dispositif, par exemple une pièce présentant un épaulement.

Un tel dispositif peut aussi avantageusement être utilisé pour serrer une première pièce contre une deuxième pièce, la première pièce formant un épaulement par rapport à la deuxième pièce. Grâce aux équipages mobiles multiples, il est possible de serrer les deux pièces simultanément : au moins un premier équipage mobile serre la première pièce et au moins un deuxième équipage mobile serre la deuxième pièce.

De plus, avantageusement et selon l'invention, l'équipage mobile comprend en outre un mors de serrage adapté pour pouvoir serrer une pièce.

Un tel mors est avantageusement monté en tête de l'équipage mobile, du côté destiné à venir en contact avec une pièce à serrer.

Alternativement une fonction de mors peut aussi être réalisée par un usinage approprié d'une pièce dudit équipage mobile dont l'extrémité est destinée à venir en contact avec une pièce à serrer.

Chaque mors présente une forme adaptée pour pouvoir serrer une pièce et en limiter le glissement par rapport au dispositif selon l'invention. Par exemple le mors peut présenter des nervures.

En particulier, avantageusement et selon l'invention, au moins un vérin est équipé d'un mors. Notamment, l'organe d'actionnement du vérin destiné à être au plus près d'une pièce à serrer, c'est-à-dire le plus externe dans le dispositif selon l'invention, peut être équipé d'un mors pour pouvoir appliquer directement l'effort qu'il fournit à une pièce devant être serrée.

Avantageusement, dans un mode de réalisation particulier, un dispositif selon l'invention est destiné au serrage ou au bridage ou au poinçonnage ou au découpage de pièces et comprend deux vérins plats disposés l'un au-dessus de l'autre, chacun d'eux s'appuyant sur des surfaces étagées d'une structure du bâti.

L'invention concerne également un dispositif d'actionnement linéaire caractérisé en combinaison par tout ou partie des caractéristiques mentionnées ci-dessus ou ci-après.

L'invention s'étend également à un procédé d'alimentation en énergie d'un dispositif d'actionnement linéaire, ledit dispositif d'actionnement linéaire comprenant :
- un bâti,
- un équipage mobile en translation par rapport au bâti selon un axe d' actionnement principal, dit axe longitudinal,
- une pluralité de vérins linéaires comportant chacun :
   ● un corps,
   ● un organe d'actionnement mobile par rapport audit corps selon un axe d' actionnement,
   ● une entrée d'alimentation en énergie,
      lesdits vérins étant interposés entre le bâti et l'équipage mobile, d'axes d'actionnement sensiblement parallèles audit axe longitudinal, de façon à pouvoir actionner l'équipage mobile selon l'axe longitudinal en venant au moins en butée sur l'équipage mobile et sur le bâti,
- au moins un dispositif d'alimentation en énergie :
   ● raccordé aux entrées d'alimentation d'au moins deux vérins,
   ● adapté pour pouvoir simultanément alimenter en énergie deux vérins à des puissances différentes,
ledit procédé d'alimentation étant caractérisé en ce que l'entrée d'alimentation en énergie d'au moins un premier vérin est alimentée en énergie à une première puissance et l'entrée d'alimentation en énergie d'au moins un deuxième vérin est alimentée en énergie à une deuxième puissance, différente de la première puissance.

Le procédé s'applique à un dispositif à vérins électriques alimentés à des puissances électriques distinctes.

Cependant, l'invention s'étend en particulier à un procédé d'alimentation d'un tel dispositif dans lequel les vérins sont des vérins fluidiques (pneumatiques ou hydrauliques), présentant pour entrée d'alimentation en énergie des bouches d'alimentation en fluide, et dans lequel aussi le dispositif d'alimentation en énergie est un dispositif d'alimentation en fluide adapté pour fournir des pressions de fluides différentes à au moins deux groupes distincts de vérins fluidiques.

En particulier dans un procédé selon l'invention, chaque vérin est alimenté de façon indépendante par ledit dispositif d'alimentation, c'est-à-dire que chaque vérin peut être alimenté par ledit fluide à une pression différente de la pression d'alimentation des autres vérins. Un tel procédé permet d'ajuster finement l'effort développé par un dispositif d'actionnement linéaire selon l'invention.

L'invention concerne également un procédé de contrôle d'un dispositif d'actionnement linéaire caractérisé en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique d'un dispositif d'actionnement linéaire selon une vue en perspective avec une coupe radiale d'un premier mode de réalisation conforme à l'invention,
- la figure 2 est une représentation schématique en coupe selon un plan sagittal II-II du dispositif d'actionnement linéaire selon le mode de réalisation de la figure 1,
- la figure 3 est une représentation schématique d'un dispositif d'actionnement linéaire selon une vue en perspective avec une coupe radiale d'un deuxième mode de réalisation conforme à l'invention,
- la figure 4 est une représentation schématique en coupe selon un plan sagittal IV-IV du dispositif d'actionnement linéaire selon le mode de réalisation de la figure 3,
- la figure 5 est une représentation schématique en coupe d'un dispositif d'actionnement linéaire selon un troisième mode de réalisation conforme à l'invention,
- la figure 6 est une représentation schématique en coupe selon le plan VI-VI orthogonal au plan de coupe de la figure 7, d'un dispositif d'actionnement linéaire selon un quatrième mode de réalisation conforme à l'invention,
- la figure 7 est une représentation schématique en coupe selon le plan VII-VII orthogonal au plan de coupe de la figure 6, du dispositif d'actionnement linéaire selon le mode de réalisation de la figure 6.

Dans tous les modes de réalisation représentés, le dispositif d'actionnement linéaire est un dispositif de serrage, par exemple de serrage d'une pièce à usiner. Il s'agit d'un dispositif d'actionnement linéaire selon un axe, dit axe longitudinal. Les coupes radiales sont définies par rapport à cet axe longitudinal, ce sont donc des plans de coupe comprenant cet axe longitudinal.

Dans toute la suite du texte, les termes « proximal » et « distal » sont définis par rapport à l'extrémité active du dispositif d'actionnement linéaire, c'est-à-dire par rapport à une pièce 10, 21, 22 pouvant être serrée par un tel dispositif.

Dans tous les modes de réalisation d'un dispositif selon l'invention présentés ci-ensuite, les vérins sont des vérins pneumatiques plats à pousser identiques entre eux. Ils comportent, pour organe d'actionnement, une membrane souple déformable qui se déforme en saillie du corps de chaque vérin, principalement selon un axe d'actionnement, sous l'action d'un gaz (ou mélange de gaz) sous pression injecté par la bouche d'alimentation dudit vérin pneumatique.

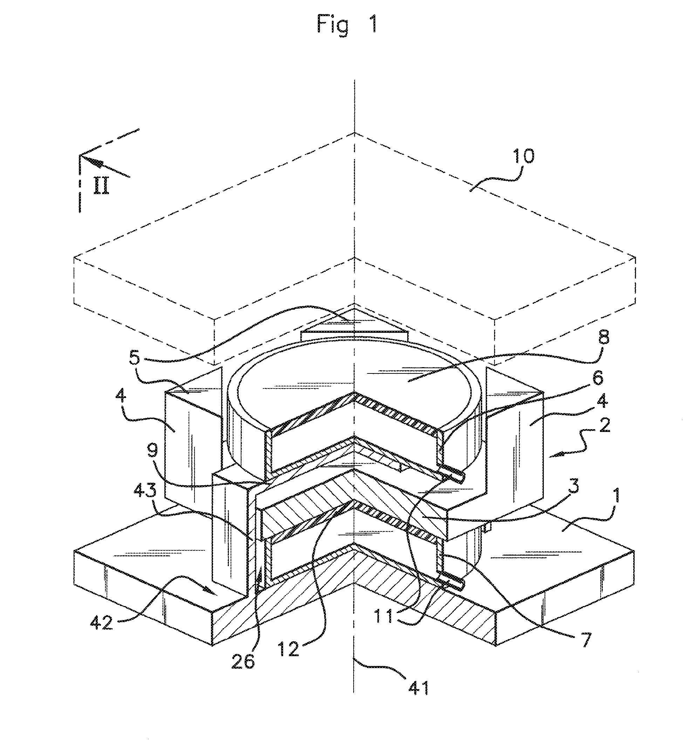

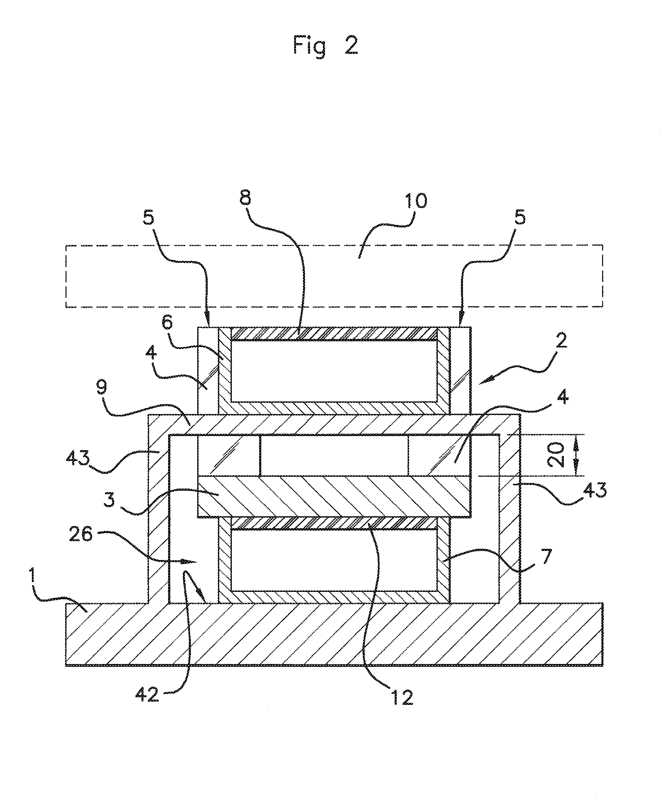

Aux figures 1 et 2 est représenté un premier mode de réalisation d'un dispositif d'actionnement linéaire selon l'invention comportant un bâti 1 et deux équipages mobiles selon un axe 41 longitudinal.

Il comporte deux vérins 6, 7 à pousser en appui sur le bâti 1.

Le bâti présente une base formant une surface d'appui 42 et un étage formant un plancher, dit plancher 9 proximal, surélevé par rapport à la surface d'appui 42. La surface d'appui 42 et le plancher 9 proximal sont sensiblement orthogonaux à l'axe 41 longitudinal et forment entre eux une chambre 26 dans laquelle un premier vérin, dit vérin 7 distal, est disposé. Le corps du vérin 7 distal est fixé à la surface 42 d'appui, de sorte qu'il est mécaniquement solidaire du bâti 1. Le vérin 7 distal présente un organe d'actionnement qui est une membrane 12 déformable.

Le corps d'un second vérin, dit vérin 6 proximal, est fixé sur le plancher 9 proximal, de sorte qu'il est aussi mécaniquement solidaire du bâti 1. Il présente un organe d'actionnement qui est une membrane 8 déformable.

Les vérins 6, 7 sont superposés selon l'axe 41 longitudinal du dispositif, et sont montés d'axe d'actionnement sensiblement colinéaire à l'axe longitudinal.

Un premier équipage mobile, dit équipage distal, comporte une entretoise 2 de transmission des efforts de l'organe d'actionnement du vérin 7 distal. En effet, l'organe d'actionnement de chaque vérin est une membrane déformable sous l'effet d'un gaz sous pression injecté par une bouche d'alimentation 11. En particulier, la membrane 12 du vérin 7 distal vient en butée unidirectionnelle l'entretoise 2 de l'équipage distal.

L'entretoise 2 de l'équipage distal présente une embase 3 et quatre doigts 4 de transmission s'élevant en saillie des coins de l'embase 3, sensiblement orthogonalement à cette dernière, pour transmettre les efforts du vérin 7 distal à une pièce 10 à serrer.

L'entretoise 2 est montée telle que son embase 3 est interposée entre le plancher 9 proximal du bâti et la membrane 12 du vérin 7 distal de sorte que la membrane 12 transmet à l'entretoise 2 l'effort développé par le vérin 7 distal.

L'entretoise 2 présente une course limitée par le plancher 9 proximal sur lequel elle vient en butée. Sa course maximale 20 est choisie inférieure à la course maximale avant éclatement du vérin 7 distal afin de s'assurer que le vérin distal n'éclatera sous aucune condition (notamment pas si une pression élevée est injectée dans le vérin distal et qu'aucune pièce à serrer ne limite le déplacement de l'entretoise).

Les doigts 4 de l'entretoise 2 sont avantageusement montés de sorte à contourner le vérin 6 proximal, notamment les doigts 4 de l'entretoise sont extérieurs à la périphérie du vérin 6 proximal. A cet effet, le plancher 9 proximal est supporté par deux parois 43 situées sur deux bords opposés dudit plancher 9 et l'embase 3 de l'entretoise dépasse suffisamment des bords libres du plancher 9 proximal pour que les doigts puissent s'étendre, sans contact avec le plancher proximal, à l'extérieur des bords libres du plancher proximal. Les doigts s'étendent longitudinalement au-delà du niveau du plancher 9 proximal, de sorte que, les deux vérins 6, 7 étant au repos, les extrémités des doigts sont sensiblement alignées avec la surface supérieure de la membrane 8 de l'équipage proximal.

Les extrémités proximales des doigts 4 de l'entretoise 2 présentent des surfaces 5 de contact qui peuvent ou non être usinées en fonction du type d'effort appliqué à la pièce 10 que l'on souhaite serrer.

Chacun des vérins d'un dispositif selon l'invention tel que représenté aux figures 1 et 2 comporte une bouche 11 d'alimentation en fluide. La bouche 11 d'alimentation du vérin 7 distal est reliée à une source d'air à pression régulée, et la bouche d'alimentation du vérin 6 proximal est reliée à une autre source d'air à pression régulée. Ainsi, chaque vérin peut être alimenté par une pression d'air différente, de sorte qu'ils peuvent être actionnés indépendamment l'un de l'autre.

Les sources d'air sous pression sont avantageusement fournies par un dispositif d'alimentation en air sous pression (non représenté) comportant au moins un compresseur et deux conduites de régulation reliant le compresseur aux bouches d'alimentation des vérins, chaque conduite étant équipée d'un organe de régulation de la pression d'air - par exemple un régulateur électropneumatique de pression.

A la figure 2, la course maximale 20 de l'équipage distal a été représentée. Cette course 20 maximale est déterminée par la hauteur de la chambre 26 dans laquelle le vérin 7 distal est installé. La hauteur de la chambre 26 est choisie de telle sorte que la course 20 maximale de l'équipage distal soit inférieure à la course maximale avant éclatement de la membrane souple du vérin distal.

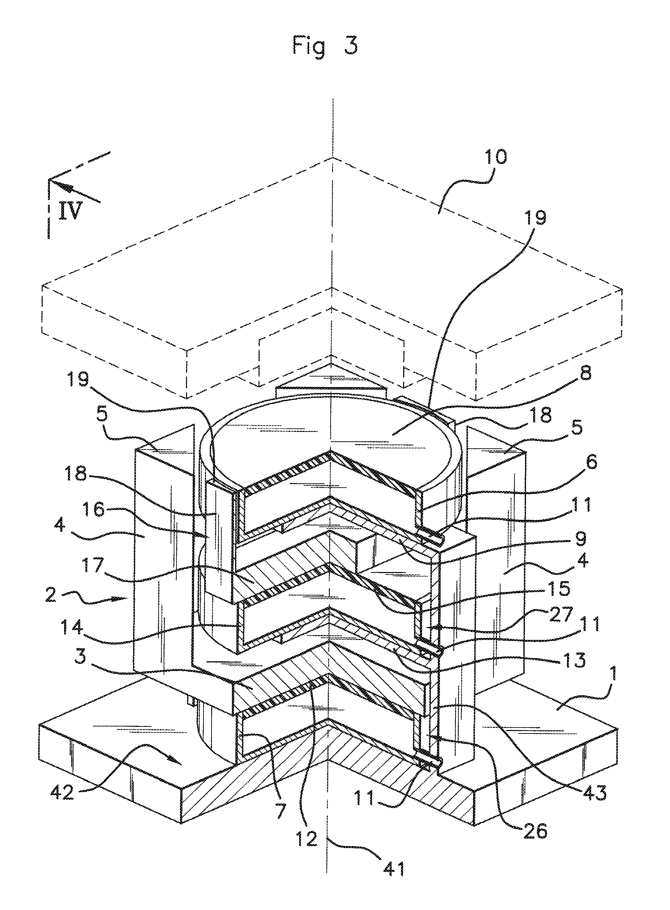

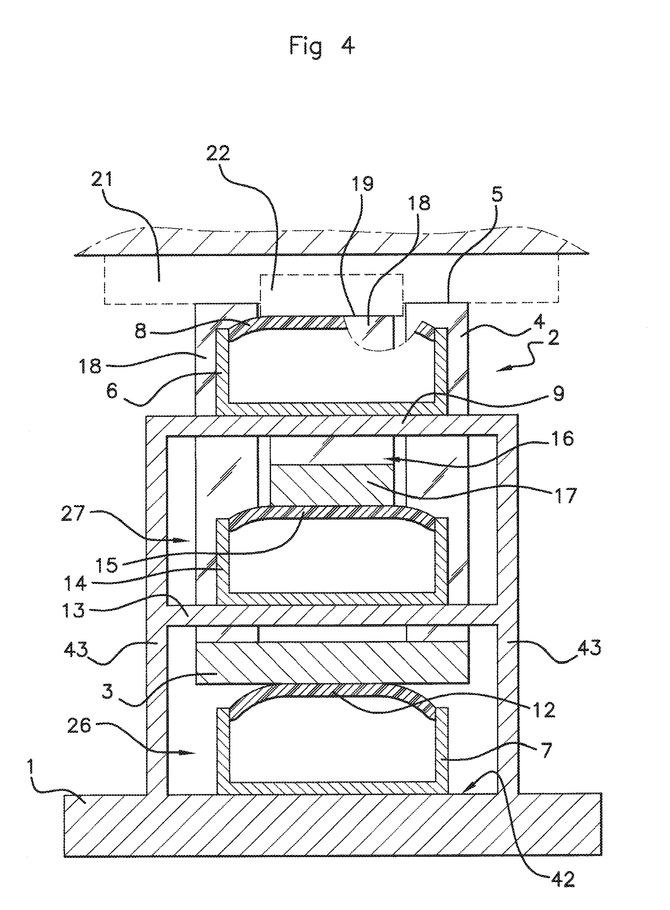

Aux figures 3 et 4 un deuxième et troisième mode de réalisation d'un dispositif selon l'invention sont représentés. Ces deux modes de réalisations sont décrits ci-ensuite ensemble pour leurs similarités. Ils comportent notamment tous deux trois vérins et des équipages mobiles indépendants.

Les vérins 6, 7, 14 sont représentés au repos à la figure 3 et actionnés à la figure 4.

Ce deuxième mode de réalisation est semblable au premier mode de réalisation représenté aux figures 1 et 2, mais comporte trois vérins superposés au lieu de deux.

En effet, le bâti 1 comporte une chambre, dite chambre 27 proximale, supplémentaire au dessus de ladite chambre distale 26 de sorte qu'il comporte un plancher 13 distal entre le plancher 9 proximal et la surface de support 42 du bâti. Un troisième vérin, dit vérin 14 intermédiaire, est donc installé dans la chambre 27 proximale, entre le vérin 7 distal et le vérin 6 proximal. Le vérin 14 intermédiaire est lui aussi monté d'axe d'actionnement sensiblement colinéaire aux axes d'actionnement du vérin 7 distal et du vérin 6 proximal, et donc sensiblement colinéaire à l'axe 41 longitudinal.

A la figure 4, les organes d'actionnement 12, 15, 8 (membranes souples) respectivement du vérin 7 distal, du vérin 14 intermédiaire, et du vérin 6 proximal sont actionnés, de sorte qu'ils sont en saillie du corps desdits vérins selon l'axe longitudinal.

Le vérin 14 intermédiaire actionne, grâce à sa membrane 15 déformable, un troisième équipage mobile, dit équipage intermédiaire, qui comporte une entretoise 16 de transmission des efforts, formée d'une embase 17 et de quatre doigts 18 de transmission. L'embase 3 de l'entretoise 2 est interposée entre la membrane 12 du vérin 7 distal et le plancher 13 distal du bâti sur lequel elle peut venir en butée longitudinalement de sorte à limiter la course de la membrane 12 souple du vérin 7 distal.

L'embase 17 de l'entretoise 16 dudit équipage intermédiaire est interposée entre la membrane 15 du vérin 14 intermédiaire et le plancher 9 proximal du bâti sur lequel elle peut venir en butée longitudinalement de sorte à limiter la course de la membrane 15 souple du vérin 14 intermédiaire.

L'extrémité de chaque doigt 18 de l'entretoise 16 dudit équipage intermédiaire présente des surfaces 19 de contact adapté pour le serrage d'une pièce 22.

La course maximale de l'équipage intermédiaire est limitée par le plancher 13 distal, et est choisie inférieure à la course maximale avant éclatement de la membrane souple dudit vérin 14 intermédiaire. Le vérin intermédiaire comporte lui aussi une bouche d'alimentation 11 par laquelle il peut être relié soit à une source d'alimentation en fluide sous pression indépendante des sources d'alimentation du vérin 7 distal et du vérin 6 proximal, soit à la source d'alimentation du vérin 7 distal, ou encore à la source d'alimentation du vérin 6 proximal. Ainsi le vérin 14 intermédiaire peut respectivement être actionné indépendamment ou de pair avec l'un des vérins distal ou proximal.

Avantageusement chaque vérin est alimenté indépendamment. Or, comme chaque vérin actionne un équipage mobile indépendant, chaque équipage mobile peut serrer avec un effort différent et exercer cet effort à une distance du dispositif différente, leur course s'ajustant à la surface de la pièce 10 à serrer. Ainsi, une pièce de forme irrégulière, telle qu'une pièce comportant localement un épaulement, peut être serrée par un dispositif selon l'invention. De même, deux pièces peuvent être maintenues l'une contre l'autre grâce à un dispositif selon l'invention, comme représenté à la figure 4.

Sur la figure 4, une première pièce 21 est maintenue contre un support par le vérin 7 distal du dispositif. Une seconde pièce 22 forme une surépaisseur par rapport à la première pièce et est maintenue contre la première pièce 21 par le vérin 6 proximal et le vérin 14 intermédiaire.

Lorsque les vérins sont actionnés à partir d'une position de repos, chaque équipage mobile se déplace selon l'axe longitudinal 41 d'une course différente pour venir au contact de la pièce à serrer située en regard dudit équipage mobile.

Grâce à un dispositif selon l'invention, chaque pièce 21, 22 peut être serrée par un effort différent, ce qui est particulièrement avantageux par exemple si l'une des deux pièces est plus fragile que l'autre.

Dans les deux premiers modes de réalisation présentés aux figures 1 à 4, le vérin 6 proximal n'est pas protégé de l'éclatement : en effet, la course de l'équipage proximal n'est pas limitée.

Dans le mode de réalisation représenté aux figures 3 et 4, les doigts des deux entretoises sont répartis à la circonférence du vérin 6 proximal. Les doigts 4 de l'équipage distal sont donc alternés périphériquement avec les doigts 16 de l'équipage intermédiaire, de sorte à optimiser l'encombrement radial d'un dispositif selon l'invention.

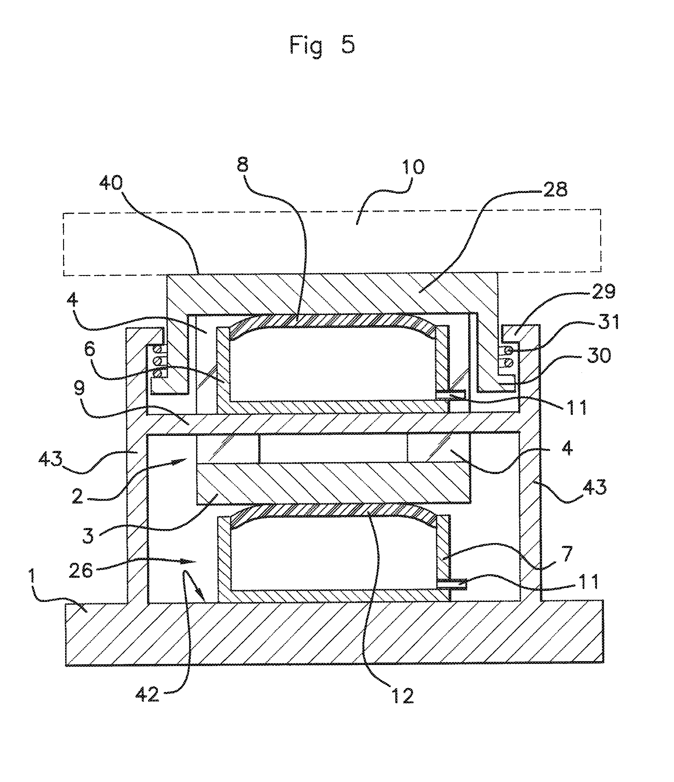

À la figure 5, un quatrième mode de réalisation d'un dispositif d'actionnement linéaire selon l'invention est représenté. Il s'agit d'un mode de réalisation semblable au mode de réalisation des figures 1 et 2, notamment parce qu'il comporte deux vérins 6, 7 superposés, alimentés indépendamment chacun par une source d'alimentation en fluide sous pression. Les vérins 6, 7 distal et proximal sont représentés actionnés.

Dans ce mode de réalisation, le dispositif comporte un unique équipage mobile comprenant :
- une pièce de tête, dite tête de serrage 28, dont la surface 40 de serrage vient au contact d'une pièce 10 à serrer, et
- une entretoise 2 de transmission entre une membrane 12 du vérin 7 distal et la tête de serrage 28.

Les vérins étant actionnés, la surface 40 de serrage de la tête de serrage 28 est en contact avec la pièce 10 à serrer.

La tête de serrage 28 présente une surface inférieure, opposée à la surface de serrage, sur laquelle l'entretoise 2 et la membrane 8 du vérin 6 proximal sont en butée.

Dans ce mode de réalisation, seule la tête de serrage 28 vient en contact avec une pièce 10 à serrer.

La tête de serrage 28 présente un collet 30 adapté pour pouvoir venir en butée avec des appuis, dit appuis 29 anti-éclatement, formés en saillie des parois 43 du bâti, lesdites parois 43 s'étendant dans leur propre prolongement, longitudinalement au-delà du plancher 9 proximal. La course de la tête de serrage est limitée par cette butée. La course maximale de la tête de serrage est choisie inférieure à la plus petite des courses maximales avant éclatement des vérins distal et proximal. Lesdits vérins représentés à la figure 5 étant identiques, les courses maximales avant leur éclatement sont identiques.

En outre le dispositif comporte un ressort de rappel 31 adapté pour rappeler l'équipage mobile et les organes d'actionnement 12, 8 (membranes) des vérins dans une position de repos. Dans cette position de repos, l'équipage mobile est au moins partiellement rétracté dans le bâti 1. Lorsque les vérins 6, 7 sont actionnés, l'équipage mobile (en particulier la tête de serrage 28) est plus en saillie du bâti qu'en position de repos. La course maximale de la tête de serrage est donc aussi limitée pour l'encombrement des spires jointes du ressort.

Le ressort de rappel 31 est un ressort de compression disposé entre le collet 30 de la tête de serrage 28 et les appuis 29 anti-éclatement du bâti.

Le ressort de rappel 31 est disposé à l'extérieur de la périphérie de la tête de serrage 28. Le ressort de rappel 31 a donc un diamètre important qui augmente l'encombrement latéral du dispositif selon le mode de réalisation de la figure 5.

En l'absence de pièces à serrer, le collet 30 exerce un effort longitudinal sur le ressort 31 à spires jointives qui est en appui sur les appuis 29.

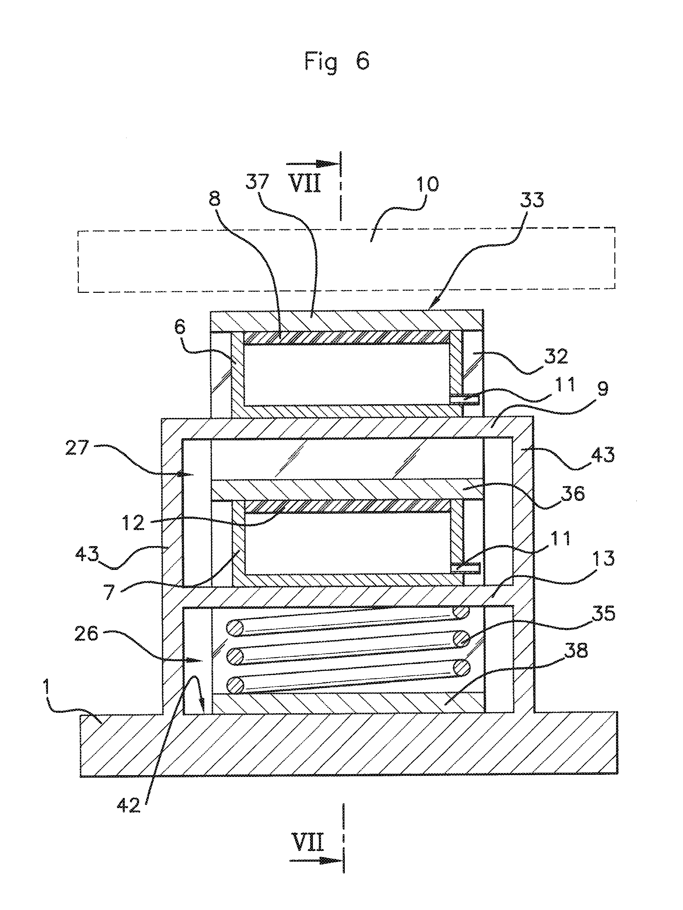

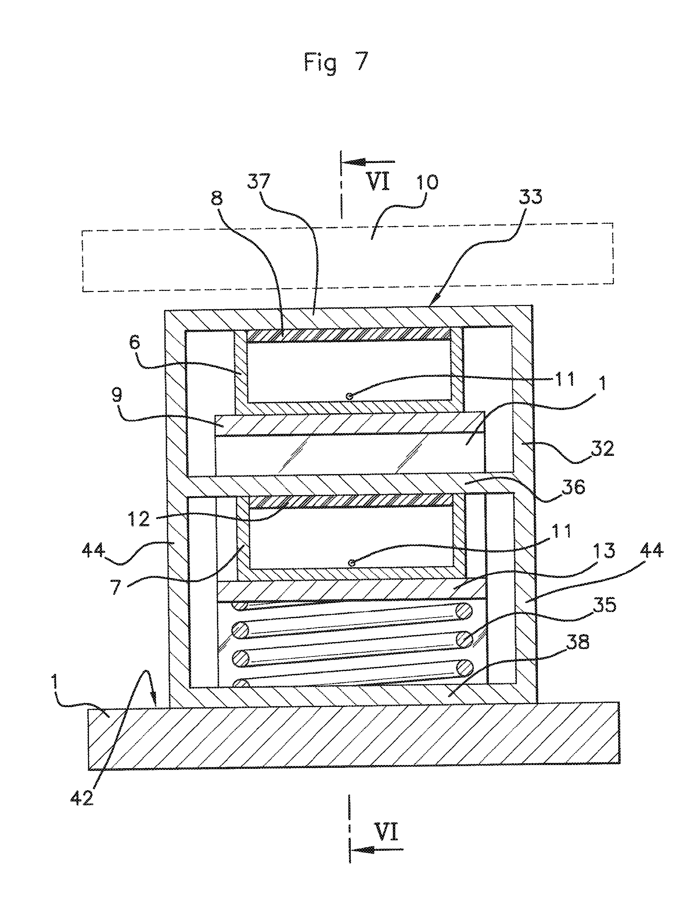

Aux figures 6 et 7 un cinquième mode de réalisation d'un dispositif selon l'invention est représenté. La figure 6 représente un tel dispositif selon une coupe par un plan sagittal contenant l'axe longitudinal du dispositif. La figure 7 représente le même dispositif selon une coupe par un plan VII-VII contenant l'axe longitudinal du dispositif et orthogonal à celui de la figure 6.

Aux figures 6 et 7 les vérins et l'équipage mobile sont représentés en position de repos.

Dans ce mode de réalisation, le bâti présente une forme globalement parallélépipédique comportant : une base formant une surface 42 d'appui et - surélevés par rapport à cette base - deux planchers, dits respectivement plancher 13 distal et plancher 9 proximal, superposés, sensiblement orthogonaux à l'axe longitudinal, et formant deux chambres, dites respectivement chambre 26 distale et chambre 27 proximale, ouvertes sur deux faces latérales opposées l'une à l'autre.

La chambre 27 proximale du bâti 1 est équipée d'un vérin, dit vérin 7 distal, dont le corps est fixé au plancher 13 distal.

Un second vérin, dit vérin 6 proximal, est monté sur le plancher 9 proximal. Ledit vérin 6 proximal est alimenté par une source d'alimentation en fluide sous pression indépendante de la source d'alimentation en fluide sous pression du vérin 7 distal.

L'équipage mobile comprend une structure, dite entretoise 32, assurant la fonction d'une entretoise de transmission des efforts, de forme globalement parallélépipédique et dont deux parois latérales opposées sont ouvertes.

Ladite entretoise 32 comprend un étage intermédiaire 36 entre deux parois d'extrémité 37, 38 selon l'axe longitudinal. Lesdites parois d'extrémité 37, 38 sont dites respectivement : paroi 37 proximale et paroi 38 distale.

L'entretoise 32 est imbriquée dans le bâti 1 de telle sorte que son étage intermédiaire 36 traverse la chambre 27 proximale du bâti. La paroi 38 distale de l'entretoise 32 traverse la chambre 26 distale du bâti.

En particulier l'étage intermédiaire 36 de l'entretoise 32 est interposé entre la membrane 12 du vérin 7 distal et le plancher 9 proximal du bâti, de sorte que le vérin 7 distal est interposé entre le plancher 13 distal du bâti et l'étage intermédiaire 36 de l'équipage mobile.

Le vérin 6 proximal est interposé entre le plancher 9 proximal du bâti et la paroi 37 proximale de l'entretoise 32 de l'équipage mobile.

Ainsi les membranes 8, 12 sont en butée unidirectionnelle respectivement sur la paroi 37 proximale et l'étage intermédiaire 36 de l'entretoise 32, c'est-à-dire que lorsqu'au moins l'un des vérins 6, 7 est actionné, la membrane dudit vérin exerce un effort sur l'entretoise, dont la paroi 37 proximale tend à sortir plus en saillie par rapport au bâti 1. En revanche, les membranes 8, 12 étant avantageusement en butée unidirectionnelle sur l'entretoise 32, si l'un des vérins 6, 7 n'est pas actionné, il ne retient pas l'entretoise.

L'effort exprimé par l'entretoise 32 sur une pièce 10 à serrer est donc la somme des efforts positifs exercés par les vérins 6, 7 sur l'équipage mobile.

Les parois latérales ouvertes de l'entretoise et les parois latérales ouvertes du bâti forment un angle sensiblement orthogonal. La largeur du bâti entre deux parois latérales 43 pleines est supérieure à la largeur de l'entretoise entre deux parois latérales ouvertes, et de même la largeur de l'entretoise entre deux parois latérales 44 pleines est supérieure à la largeur du bâti entre deux parois latérales ouvertes ; de sorte que l'entretoise 32 est mobile en translation sans frottement avec le bâti 1 selon l'axe longitudinal.

La paroi 37 proximale de l'entretoise 32 présente une surface 33 de serrage sur une pièce 10 à serrer. La paroi d'extrémité opposée, ou paroi 38 distale, de l'entretoise traverse la chambre 26 distale du bâti de sorte qu'elle est interposée entre la surface d'appui 42 du bâti et le plancher 13 distal du bâti.

En outre, un ressort de compression forme un ressort de rappel 35 interposé entre le plancher 13 distal du bâti et la paroi 38 distale de l'entretoise. Ce ressort de rappel 35 peut présenter des dimensions réduites par rapport au ressort de rappel 31 du mode de réalisation de la figure 5, réduisant ainsi l'encombrement latéral du dispositif selon l'invention du mode de réalisation représenté aux figures 6 et 7. De même ce mode de réalisation de l'équipage mobile permet d'obtenir un dispositif plus compact qu'avec une pluralité d'équipages mobiles selon les modes de réalisation des figures 1 à 4, notamment pour un nombre de vérins supérieur à trois.

Le ressort de rappel 35 exerce un effort sur l'entretoise 32 qui se soustrait à la somme des efforts exercés par les vérins 6, 7 sur cette dernière. Le ressort de rappel 35 a donc pour fonction de rappeler l'équipage mobile en position de repos, c'est-à-dire dans une position dans laquelle sa paroi distale 38 est en contact avec la surface d'appui 42 de la base du bâti. Cette position de repos correspond aussi à une position de repos des vérins 6, 7 pneumatiques, et le ressort de rappel 35 permet donc aussi de ramener les membranes souples des vérins en position de repos si tel n'était pas le cas.

Dans tous les modes de réalisation représentés aux figures 1 à 7, on peut par exemple utiliser des vérins du type EV 63-5 (commercialisés par la société FESTO de référence 11911991) adaptés pour fournir une force maximale de 1680 N lorsqu'ils sont alimentés par un gaz sous pression à 6 bars. De nombreux autres vérins, par exemple de référence 565041 à alimentation par le plancher, peuvent aussi être utilisés.

Ainsi, par exemple, un dispositif selon le mode de réalisation de la figure 4 permet théoriquement d'obtenir une force maximale de serrage de 5040 N.

Un dispositif selon l'invention peut notamment être avantageusement monté dans une machine d'usinage de pièces profilées du type MPS 12 commercialisé par la société MICHEL PIOCH dans laquelle il assurera le serrage de ladite pièce pendant son usinage.

L'invention peut faire l'objet de nombreuses autres variantes de réalisation non représentées.

En particulier l'invention s'étend à des modes de réalisation dans lesquelles plus de deux ou trois vérins sont superposés les uns aux autres, de sorte à pouvoir obtenir un effort maximal exercé par un dispositif selon l'invention d'autant plus important que le nombre de vérins est grand.

Ainsi, les doigts d'une entretoise d'équipage mobile peuvent traverser le(s) plancher(s) d'un bâti au lieu de s'étendre à l'extérieur de(s) plancher(s). Le nombre de doigts d'une entretoise est adapté au mode de réalisation d'un dispositif selon l'invention.

De même lorsque, comme aux figures 3 et 4, l'équipage mobile comporte plusieurs entretoises présentant chacune au moins un doigt, les entretoises supérieures peuvent être imbriquées dans les entretoises inférieures de sorte que les entretoises inférieures présentent un encombrement latéral plus important que les entretoises supérieures. Les doigts des différentes entretoises sont alors concentriquement répartis. Cette répartition présente pour inconvénient d'augmenter l'encombrement radial du dispositif. Dans la solution proposée aux figures 3 et 4 au contraire, les doigts sont répartis autour de la circonférence du vérin proximal, de sorte que chaque entretoise présente à peu près le même encombrement.

Les vérins peuvent aussi être des vérins hydrauliques. De même, de façon équivalente, les vérins peuvent être des vérins électriques dont les alimentations en puissance sont indépendantes.

Rien n'empêche non plus d'utiliser une pluralité de ressorts de rappel dans un même dispositif d'actionnement linéaire selon l'invention.

Le bâti et l'équipage mobile (notamment l'entretoise de l'équipage mobile) peuvent être réalisés de différentes formes avec des fonctions identiques ou équivalentes à celles obtenues par les modes de réalisation présentés. Par exemple le bâti et l'entretoise du mode de réalisation des figures 6 et 7 peuvent ne présenter chacun qu'une paroi latérale pleine disposées orthogonalement l'une par rapport à l'autre ou opposées l'une par rapport à l'autre. De même le bâti et l'entretoise peuvent être réalisés par des ossatures à poutres et longerons. De nombreuses autres solutions équivalentes peuvent être envisagées

Dans un procédé de contrôle selon l'invention, la pression d'alimentation en fluide de chacun des vérins peut être contrôlée en contrôlant les dispositifs de régulation de la pression de source d'alimentation en fluide sous pression des vérins. Le contrôle de ces dispositifs de régulation peut être effectué manuellement, par un ordinateur, etc.

En outre, l'effort appliqué sur la pièce à serrer peut être connu en mesurant les efforts transmis par chaque doigt à la pièce à serrer, à l'aide de capteurs d'effort placés sur chaque doigt. La régulation de la puissance d'alimentation en énergie peut être gérée en fonction de ces mesures d'effort.

## Revendications

1. Dispositif d'actionnement linéaire comprenant :
- un bâti (1),
- un équipage mobile en translation par rapport au bâti selon un axe d'actionnement principal, dit axe (41) longitudinal,
- une pluralité de vérins (6, 7) linéaires comportant chacun :
● un corps,
● un organe d'actionnement mobile (8, 12) par rapport audit corps selon un axe d'actionnement,
● une entrée d'alimentation (11) en énergie,
lesdits vérins (6, 7) étant interposés entre le bâti (1) et l'équipage mobile, d'axes d'actionnement sensiblement parallèles audit axe (41) longitudinal, de façon à pouvoir actionner l'équipage mobile selon l'axe longitudinal en venant au moins en butée sur l'équipage mobile et sur le bâti,
**caractérisé en ce qu'**il comporte en outre au moins un dispositif d'alimentation en énergie :
- raccordé aux entrées d'alimentation (11) d'au moins deux vérins (6, 7),
- adapté pour pouvoir fournir simultanément une première puissance à au moins un premier vérin, et une deuxième puissance, différente de la première puissance, à au moins un deuxième vérin.

2. Dispositif selon la revendication 1, **caractérisé en ce que** :
- chaque vérin (6, 7) est un vérin fluidique,
- l'entrée d'alimentation (11) en énergie de chaque vérin est une bouche d'alimentation en fluide,
- le dispositif d'alimentation en énergie est un dispositif d'alimentation en fluide sous pression adapté pour pouvoir fournir simultanément un fluide sous pression à une première pression à au moins un premier vérin, et à une deuxième pression, différente de la première pression, à au moins un deuxième vérin.

3. Dispositif selon l'une des revendications 1 ou 2, **caractérisé en ce que** chaque vérin est raccordé, via sa bouche d'alimentation (11), à un dispositif d'alimentation en fluide sous pression par une conduite, dite conduite de régulation, équipée d'un organe de régulation de la pression du fluide.

4. Dispositif selon l'une des revendications 1 à 3, **caractérisé en ce que** chaque conduite de régulation n'est reliée qu'à un unique vérin, de façon à pouvoir alimenter chacun des vérins (6, 7) à une pression de fluide différente de celle des autres vérins.

5. Dispositif selon l'une des revendications 1 à 4, **caractérisé en ce que** les vérins (6, 7) sont d'axes d'actionnement sensiblement colinéaires.

6. Dispositif selon l'une des revendications 1 à 5, **caractérisé en ce qu'**au moins un vérin est un vérin pneumatique plat dont l'organe d'actionnement (8, 12) est une membrane souple.

7. Dispositif selon l'une des revendications 1 à 6, **caractérisé en ce que** l'équipage mobile présente plusieurs étages selon l'axe (41) longitudinal, dont un au moins est adapté pour pouvoir être en contact avec l'organe d'actionnement (8, 12) d'au moins un vérin.

8. Dispositif selon l'une des revendications 1 à 7, **caractérisé en ce que** le bâti (1) présente une pluralité de chambres (26, 27) étagées selon l'axe (41) longitudinal, chaque vérin étant disposé dans l'une des chambres du bâti.

9. Dispositif selon les revendications 7 et 8, **caractérisé en ce qu'**au moins un étage de l'équipage mobile est interposé, dans une chambre du bâti (1) équipée d'un vérin, entre l'organe d'actionnement (8, 12) dudit vérin et une paroi de ladite chambre située en vis-à-vis de l'organe d'actionnement dudit vérin.

10. Dispositif selon l'une des revendications 1 à 9, **caractérisé en ce que** le bâti (1) comporte au moins une butée adaptée pour pouvoir limiter une course de l'équipage mobile selon l'axe (41) longitudinal.

11. Dispositif selon la revendication 10, **caractérisé en ce que** la course maximale de l'équipage mobile est inférieure à la course maximale de l'organe d'actionnement (8, 12) d'un vérin.

12. Dispositif selon l'une des revendications 1 à 11, **caractérisé en ce que** l'équipage mobile est rappelé dans une position, dite position de repos, par un ressort de rappel (31, 35), ladite position de repos de l'équipage mobile correspondant à une position de repos des vérins (6, 7).

13. Dispositif selon l'une des revendications 1 à 12, **caractérisé en ce qu'**il comporte un premier équipage mobile selon l'axe (41) longitudinal, actionné par au moins un premier vérin, et au moins un deuxième équipage mobile selon l'axe longitudinal, différent du premier équipage mobile, actionné par au moins un deuxième vérin, différent dudit premier vérin.

14. Dispositif selon l'une des revendications 1 à 13, **caractérisé en ce qu'**il est destiné au serrage ou au bridage ou au poinçonnage ou au découpage de pièces et **en ce qu'**il comprend deux vérins plats (6, 7) disposés l'un au dessus de l'autre, chacun d'eux s'appuyant sur des surfaces étagées d'une structure du bâti (1).

15. Procédé d'alimentation en énergie d'un dispositif d'actionnement linéaire, ledit dispositif d'actionnement linéaire comprenant :
- un bâti (1),
- un équipage mobile en translation par rapport au bâti selon un axe d'actionnement principal, dit axe (41) longitudinal,
- une pluralité de vérins linéaires (6, 7) comportant chacun :
● un corps,
● un organe d'actionnement (8, 12) mobile par rapport audit corps selon un axe d'actionnement,
● une entrée d'alimentation (11) en énergie,
lesdits vérins (6, 7) étant interposés entre le bâti et l'équipage mobile, d'axes d'actionnement sensiblement parallèles audit axe (41) longitudinal, de façon à pouvoir actionner l'équipage mobile selon l'axe longitudinal en venant au moins en butée sur l'équipage mobile et sur le bâti,
- au moins un dispositif d'alimentation en énergie :
● raccordé aux entrées d'alimentation (11) d'au moins deux vérins (6, 7),
● adapté pour pouvoir simultanément alimenter en énergie deux vérins (6, 7) à des puissances différentes,
ledit procédé d'alimentation étant **caractérisé en ce que** l'entrée d'alimentation (11) en énergie d'au moins un premier vérin est alimentée en énergie à une première puissance et l'entrée d'alimentation (11) en énergie d'au moins un deuxième vérin est alimentée en énergie à une deuxième puissance, différente de la première puissance.
